# EUROPEAN PATENT APPLICATION

(11) **EP 2 434 596 A1**
(43) Date of publication of application: **28.03.2012**
(21) Application number: 11182472.8
(22) Date of filing: 23.09.2011
(51) Int. Cl.: H02G 1/12

(54) **Tool for removing outer insulation of an electric cable and corresponding machine**

(30) Priority: 24.09.2010 IT CO20100053
(71) Applicant: La.r.c. S.r.l., 20020 Busto Garolfo (IT)
(72) Inventor: Richichi, Giuseppe, 20020 BUSTO GAROLFO (IT)
(74) Representative: De Ros, Alberto

(57) **Abstract**

The tool (1) serves for removing outer insulation of an electric cable (3) and comprises an elongated body (4) of cylindrical or prismatic shape made of elastic metallic material that has, in a first end zone thereof, a plurality of appendages (5) made in said body (4) by longitudinal cuts (6), and elastic means (7) positioned around said body (4) in correspondence to said first end zone and adapted to exert radial forces on said appendages (5) so as to bend them towards the axis (40) of said body (4); the body (4) is adapted to receive said electric cable (3) in an axial position between said appendages (5) in a longitudinal direction; the appendages (5) function as elongated cutting elements and are positioned longitudinally relative to the cable (3), pressed against the latter by the elastic means (7) and rotated around it by a motor (2).

## Description

### FIELD OF THE INVENTION

The present invention relates to a tool for removing outer insulation of an electric cable, as well as an corresponding machine.

### PRIOR ART

The operation of removing the outer electrical insulation (of rigid material, typically enamel) of lengths of electric cable, also called "stripping", is not easy to perform, especially if a good result is desired, quickly and by an operator without special training. The operation is complicated further if it must be carried out repeatedly on electric cables of different diameter. Moreover, the risk of injury to the operator while performing this operation should be limited as far as possible.

It should be noted that the preparation for use of coaxial electric cables is quite a complex problem, but it is different from that considered in the present patent application both with respect to the different structure of said cables and with respect to the different materials used in said cables. In other words, the present patent application relates to "ordinary" electric cables, i.e. provided with a single internal electrical conductor and with only one layer of outer electrical insulation.

In the past, this operation was often performed with suitable pliers; in this case, it takes a long time even if the pliers are used by a trained operator.

Tools mounted on the rotating shaft of electric motors are also known; the stripping operation takes place while the driving shaft is rotating. These tools comprise three balancing arms; a blade is welded on a first end of each of the arms and is arranged obliquely (at about 45°) relative to the electric cable to be stripped during the stripping operation; a mass is placed on a second end of each arm; rotation of the motor causes a slight rotation of each arm under the action of the centrifugal force that acts on the masses of the arms and hence there is contact and pressure of the three blades on the electric cable, more precisely on its outer electrical insulation.

### SUMMARY

The applicant realized that these tools are rather critical because the three arms must be perfectly calibrated with one another to operate well, because the electric cable is not guided during the stripping operation and so can easily whip about and sway, with a risk of injury to the operator's fingertips; moreover, the blades easily wear out because they come in contact with the electric cables always at the same, single point.

The general aim of the present invention is to provide a tool for removing outer insulation of an electric cable that overcomes some or all of the drawbacks of the known solutions.

This aim is achieved with the tool having the technical features of the appended claims that form an integral part of the present description.

According to a further aspect, the present invention also relates to a machine for removing outer insulation of an electric cable that comprises said tool.

The tool according to the present invention serves for removing outer insulation of an electric cable; in general, it comprises:
- an elongated body of cylindrical or prismatic shape made of elastic metallic material, which has in a first end zone, a plurality of the appendages made in said body by longitudinal cuts, and
- elastic means positioned around said body in correspondence to said first end zone and adapted to exert radial forces on said appendages so as to bend them towards the axis of said body;
said body is adapted to receive said electric cable in an axial position between said appendages in a longitudinal direction.

Said body can advantageously have a blind hole that extends axially from a second end towards a first end preferably up to a distance of 5-10 mm from said first end.

Said hole can serve for example for mounting the tool on the shaft of a motor and/or for facilitating bending of said appendages. To facilitate assembly, the hole can be provided with an internal thread in its end zone. The tool could be mounted directly on the shaft of the motor or via a suitable adapter; in this way, flexibility of use is increased, since a dedicated motor is not required - a standard motor can be used.

A first end in said first end zone can advantageously have a frontal concavity. This concavity can serve for example for making the mechanical action of the appendages on the insulation of the electric cable more effective.

Said elastic means are typically a steel ring or a helical spring made of steel. These embodiments of the elastic means are the simplest and most effective; it should be noted that the helical spring extends longitudinally along said appendages and so is able to exert forces more uniformly.

Said cuts are typically at least three in number and are preferably even-numbered; the ideal number of cuts is four or six. With such numbers, said cuts can be made more easily.

Each of said cuts can have, in correspondence to one of the ends thereof, a hole in a direction perpendicular to the axis of said body. Said hole facilitates bending of said appendages.

Said body can advantageously have a collar at a first end thereof. This prevents or at least impedes detachment of the elastic means from said body.

Said body can advantageously have a conical shape, preferably with a knurled surface, in said first end zone. This conical shape allows adjusting the position of said elastic means in such a way that the tool is adapted quickly and easily for working on electric cables of different diameters. The knurled surface prevents or at least impedes sliding of the elastic means along said body.

The machine according to the present invention is used for removing outer insulation of an electric cable; in general, it comprises an electric or pneumatic motor provided with a shaft and a tool according to the present invention mounted (directly or indirectly) on said shaft.

Said motor is adapted to rotate said shaft preferably at a speed greater than 1000 revolutions per minute and more preferably at a speed greater than 5000 revolutions per minute when said tool is mounted on said shaft. In this way, removal of the electrical insulation is rapid and effective.

The process for performing the removal of the outer electrical insulation of a length of electric cable generally envisages the use of a plurality of elongated cutting elements that are positioned longitudinally relative to said cable length, pressed against it and rotated about it; typically, the pressure is provided by elastic means; typically, the rotation is provided by a motor (electric or pneumatic); typically, the cutting elements correspond to appendages of the body of a tool.

In particular, for performing said removal, said cutting elements are set rotating and then said cable length is brought up to said rotating cutting elements with a movement in a longitudinal direction and moved gradually to and fro along said cutting elements.

With the tool according to the present invention, particularly in its best embodiments, the insulation can be removed completely in a single pass: during the step of inserting the electric cable in the tool, the insulation is removed almost integrally and the material removed advantageously remains on the outside of the tool, and during the step of extracting the electric cable from the tool, "finishing" takes place, i.e. removal of any small residues of insulation.

It should be noted that the present invention was devised, and so is particularly efficient and effective, for removing electrical insulation of rigid material, typically enamel; moreover, it is efficient and effective on electric cables with an electrical conductor both of copper and of aluminium.

### LIST OF DRAWINGS

The technical features of the present invention as well as its advantages will become clear from the description given hereunder, to be considered in conjunction with the appended drawings, in which:
- Fig. 1: shows an example of implementation of a machine according to the present invention in a context of use; in particular, Fig. 1A shows the condition in which an electric cable is outside of the tool of the machine, Fig. 1B shows the condition in which the electric cable has been partially inserted into the tool of the machine, Fig. 1C shows the condition in which the electric cable has been extracted from the tool of the machine after the electrical insulation has been removed from an end section (shown in black in the figure) of the electric cable,
- Fig. 2: shows a side view of an example of implementation of a tool according to the present invention,
- Fig. 3: shows a front view of the tool in Fig. 2,
- Fig. 4: shows a view in longitudinal section of the tool in Fig. 2,
- Fig. 5: shows a front view of an example of implementation of a tool according to the present invention without elastic means,
- Fig. 6: shows a front view of the tool in Fig. 5 after elastic means have been fitted, and
- Fig. 7: shows a cross-sectional view of the tool in Fig. 5 with an electric cable inserted.

### DETAILED DESCRIPTION

Both this description and these drawings are to be regarded as being for purposes of illustration and accordingly are non-limiting; therefore the present invention can be implemented according to various other embodiments; moreover, it must be borne in mind that these diagrams are schematic, simplified and not to scale, as will be evident to a person skilled in the art.

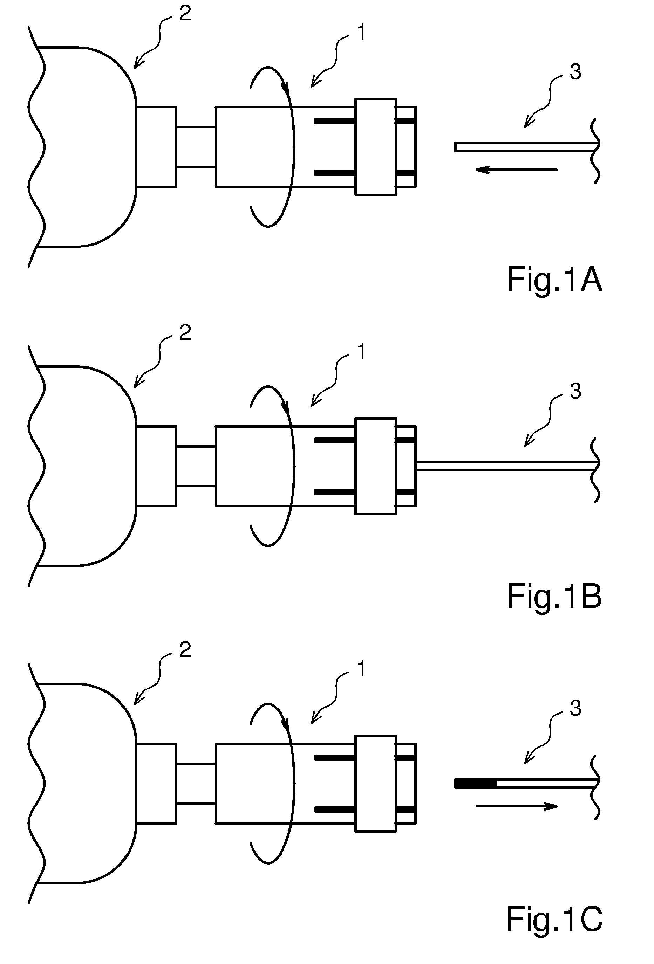

In Fig. 1 (combination of Fig. 1A and Fig. 1B and Fig. 1C), reference number 1 indicates a tool according to the present invention in its entirety, reference number 2 indicates a pneumatic motor and reference number 3 indicates an electric cable. The motor 2 is set rotating and with it also the tool 1 while the cable 3 is outside the tool 1, as shown in Fig. 1A.

Next, the cable 3 is brought up to the tool 1 with a movement in a longitudinal direction along the axis of the tool 1 and gradually inserted in the tool 1 on an end section, as shown in Fig. 1B.

Finally, the cable 3 is extracted from the tool 1 after the electrical insulation corresponding to the end section has been removed by the action of the tool 1, as shown in Fig. 1C.

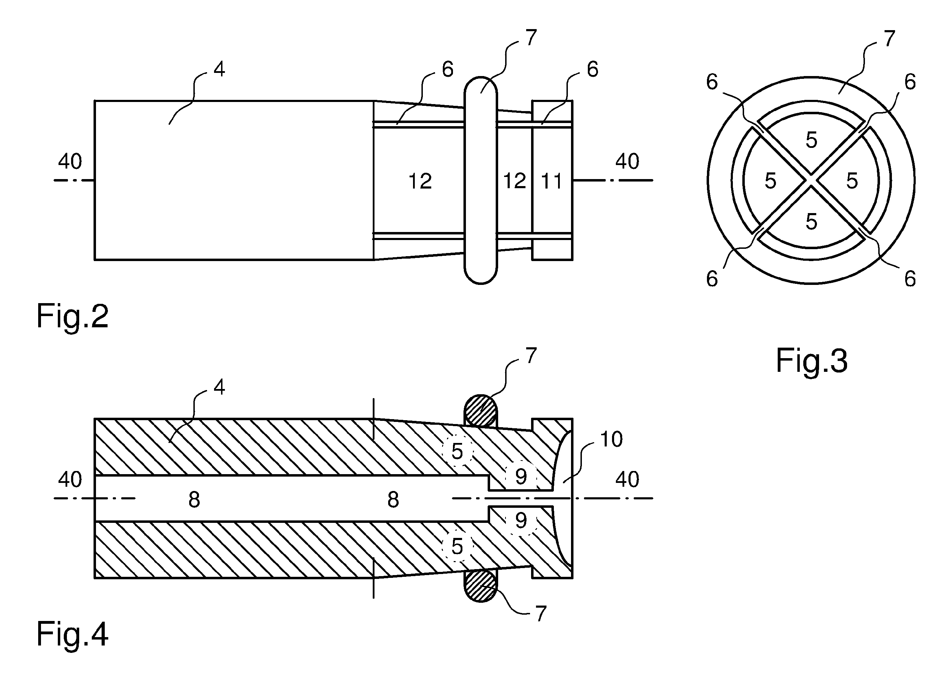

The tool 1 in Fig. 2, Fig. 3 and Fig. 4 (which is similar to tool 1 in Fig. 1) comprises a steel body 4 of cylindrical shape, the axis of which is indicated with 40, and an elastic ring 7 made of steel placed around the body 4 corresponding to a first end zone of the body 4. As already stated, the body of the tool can be of prismatic instead of cylindrical shape; moreover, instead of a simple elastic ring it is possible to envisage a helical spring (as in Fig. 1).

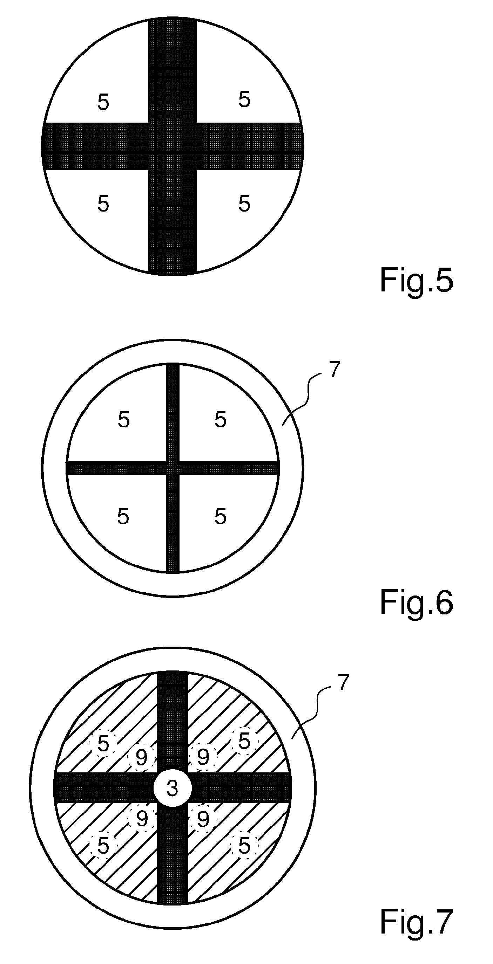

The ring 7 is able to exert radial forces on appendages 5 of the body 4 so as to bend them towards the axis 40 of the body 4; this will be better understood later, when considering Fig. 5 and Fig. 6.

The body 4 is able to receive an electric cable 3, more precisely an end section of an electric cable, in an axial position 40 between the appendages 5 in a longitudinal direction; this will be better understood when considering Fig. 7.

The body 4 has, in the first end zone, a plurality of appendages 5 (four in the examples in Fig. 2, Fig. 3, Fig. 4, Fig. 5, Fig. 6, Fig. 7) made in the body 4 by longitudinal cuts 6 (four in the example in Fig. 2, Fig. 3, Fig. 4, Fig. 5, Fig. 6, Fig. 7); since there is an even number of cuts in the examples in the figures and they are arranged symmetrically relative to the axis of the body, they can also be provided in pairs (symmetrical).

The body 4 has a blind hole 8 that extends axially from a second end into a second end zone of the body 4 towards a first end in the first end zone of the body 4 (in Fig. 2, Fig. 3, Fig. 4 the blind hole extends from left to right) up to a distance of 5-10 mm from the first end; the thread of the blind hole 8 is not shown in the diagram.

The zone of the body from the end of the blind hole 8 to the first end of the body 4 is what performs the removal of the electrical insulation; in particular, the edges 9 of the appendages 5 due to the cuts 6, which are located in this zone (see also Fig. 7), act as cutting elements.

The edges 9 in the example in Fig. 2, Fig. 3, Fig. 4 are 5-10 mm long. However, an electric cable can also be stripped, by the tool 1, over a greater length; for this purpose, it will be sufficient to insert the electric cable 3 gradually into the tool 1 for the desired length (in Fig. 4 the side for insertion is on the right); if said length is greater than that of the edges 9, the tip of the cable will go into hole 8 after it has been in contact with the edges 9 (consider in particular Fig. 4); and then extract it gradually from the tool 1.

In the example in Fig. 2, Fig. 3, Fig. 4, the first end of the body 4 (where the electric cable is inserted), which is located in the first end zone of the body 4, has a frontal concavity 10.

The cuts 6 in the example in the drawings have a fixed width over their entire length. However, as an alternative, said width could also be variable, in particular greater at the start of the cut corresponding to the first end and smaller at the end of the cut, and with a gradual, uniform reduction; in fact, the purpose of these cuts 6 is to allow the appendages 5 of the body 4 to bend towards the axis 40 of said body 4. Moreover, each of the cuts 6 could have (contrary to what is shown in the figures), corresponding to one end thereof, a hole in a direction perpendicular to the axis 40 of the body 4.

In the example in Fig. 2, Fig. 3, Fig. 4, the body 4 has, at its first end, a collar 11. In the example in Fig. 2, Fig. 3, Fig. 4, the body 4 has a conical shape 12, preferably with a knurled surface, in its first end zone.

It will be understood from the description and the drawings that the body of the tool could be obtained advantageously by processing for example a single piece of metal, for example steel. Taking into account the different functions of the various parts of the body (in particular, the appendages must be able to bend and then straighten, while the edges must be and remain sharp), the body could be made of the same material, but undergo local treatment to differentiate its properties; for example, it is possible to envisage an operation of hardening of the zone of the body for removing the electrical insulation.

With the aid of Fig. 5, Fig. 6, Fig. 7, the positioning of the appendages of the body of the tool will be explained below. These drawings are not to scale; in particular the width of the cuts is much greater than in reality so as to show the movement of the appendages.

Fig. 5 shows a front view of four appendages 5 separated from one another by four cuts 6 (in black); no elastic means are mounted on the tool 1.

Fig. 6 shows a front view of the tool 1 of Fig. 5 after fitting an elastic ring 7; the appendages 5 are bent by the action of the radial forces exerted by the ring 7 on the appendages 5 and these move notably closer together.

Fig. 7 shows a front (cross-sectional) view of the tool 1 of Fig. 5 after an electric cable 3 has been inserted; the appendages 5 spread out, receiving the electric cable 3 between them; the radial forces exerted by the ring 7 press the edges 9 of the appendages 5 against the outer electrical insulation of the electric cable 3. It should be noted that, according to the typical use of the tool 1, the condition in Fig. 7 occurs while the tool 1 with said appendages 5 is rotating, whereas the electric cable 3 is stationary.

The simplicity of design and economical nature of the tool according to the present invention is very clear.

To construct a machine according to the present invention it is sufficient to mount a tool according to the present invention on the shaft of an electric or pneumatic motor, as shown in Fig. 1.

As already stated, it is best to select a motor that is able to rotate the tool preferably at a speed greater than 1000 revolutions per minute and more preferably at a speed greater than 5000 revolutions per minute.

The removal of the outer electrical insulation of a length of electric cable (indicated with 3 in Fig. 7) is thus effected by a plurality of elongated cutting elements (indicated with 9 in the examples in Fig. 4 and Fig. 7) that are positioned longitudinally relative to said cable length, pressed against the latter and rotated about it.

In particular, to effect removal, the cutting elements are set rotating and then the cable length is brought up to the rotating cutting elements with a movement in the longitudinal direction and are moved gradually to and fro along said cutting elements (see the sequence in Fig. 1A, Fig. 1B and Fig. 1C).

It will be understood, from the foregoing, that there are no risks for the operator using the tool and the machine according to the present invention, and moreover no calibration of the tool is required, the wear of the tool is distributed and uniform, and finally the electric cable is held in position automatically and is properly guided.

## Claims

1. Tool (1) for removing outer insulation of an electric cable (3) comprising:
- an elongated body (4) of cylindrical or prismatic shape made of elastic metallic material that has, in a first end zone thereof, a plurality of appendages (5) made in said body by longitudinal cuts (6), and
- elastic means (7) positioned around said body (4) in correspondence to said first end zone and adapted to exert radial forces on said appendages (5) so as to bend them towards the axis (40) of said body (4);
said body (4) being adapted to receive said electric cable (3) in an axial position between said appendages (5) in a longitudinal direction.

2. Tool (1) according to claim 1, wherein said body has a blind hole that extends axially from a second end towards a first end, preferably up to a distance of 5-10 mm from said first end.

3. Tool (1) according to claim 1 or 2, wherein a first end in said first end zone has a frontal concavity.

4. Tool (1) according to any one of the preceding claims, wherein said elastic means are a steel ring or a helical spring made of steel.

5. Tool (1) according to any one of the preceding claims, wherein each of said cuts has, in correspondence to one of the ends thereof, a hole in a direction perpendicular to the axis of said body.

6. Tool (1) according to any one of the preceding claims, wherein said body has a collar at a first end thereof.

7. Tool (1) according to any one of the preceding claims, wherein said body has a conical shape, preferably with a knurled surface, in said first end zone.

8. Machine (1,2) for removing outer insulation of an electric cable (3) comprising an electric or pneumatic motor (2) provided with a shaft and a tool (1) according to any one of claims 1 to 7 mounted on said shaft, said motor (2) being adapted to rotate said shaft preferably at a speed greater than 1000 revolutions per minute and more preferably at a speed greater than 5000 revolutions per minute when said tool (1) is mounted on said shaft.
